# EUROPEAN PATENT APPLICATION

(11) **EP 4 749 205 A1**
(43) Date of publication of application: **27.05.2026**
(21) Application number: 24214868.2
(22) Date of filing: 22.11.2024
(51) Int. Cl.: F24S 25/61, H02S 20/24, F24S 25/30, F24S 25/613

(54) **ROOFTOP SOLAR MOUNT**

(71) Applicant: Protan AS, 3002 Drammen (NO)
(72) Inventor: Anisdahl, Lars, 0682 Oslo (NO); Nordseth, Bjørn, 1394 Nesbru (NO); Brunsell, Gard, 3179 Åsgårdstyrand (NO)
(74) Representative: Acapo Onsagers AS

(57) **Abstract**

The present disclosure provides a method of installing a mount assembly for mounting rooftop equipment. The method includes securing a sacrificial membrane (102) to a roof system (200), providing a rail (110) for attaching rooftop equipment thereto on the sacrificial membrane (102) such that a base (112) of the rail (110) is at least partially in contact with the sacrificial membrane (102) on a first side of the rail (114), and securing the rail (110) to the sacrificial membrane (102) by an induction welding process. The induction welding process comprises inductively heating one or more inductively-heatable portions (118) of, or received in, the base (112) from a second side (116) of the rail (110) that opposes the first side (114).

## Description

### Field of Invention

The present disclosure relates to a method of installing a mount assembly for mounting rooftop equipment, a mount assembly for mounting rooftop equipment, and a rooftop equipment attachment kit of parts.

### Background

There is often a need to attach rooftop equipment to a roof. For example, there is a growing desire to attach solar panels to rooftops. Other rooftop equipment for attaching to a roof could include antennas, satellite dishes, small-scale wind turbines, HVAC systems, safety systems, railings, roof protection equipment, conductors etc.

Rooftop equipment should be securely attached to a roof, for example in order to prevent the rooftop equipment from being dislodged and / or blowing off the roof during high winds.

One way of securing rooftop equipment to a roof is using a ballasted system in which ballast is used having enough weight to prevent the equipment from blowing off the roof. There are many disadvantages with such arrangements. For example, the roof must have a suitably high strength to withstand holding the ballast. It is important not to overload the roof and exceed the rated loading 0 could damage the roof.

Another way of securing rooftop equipment to a roof comprises mechanically attaching a mount system to the roof. However, this often requires a large number of individual mechanical attachments to be made, with each mechanical attachment comprising a fixing that penetrates into the roof. For example, a roof might comprise a roof system comprising a deck, overlaid with insulation overlaid with a membrane. The mechanical attachments need to penetrate through the membrane and insulation into the deck to provide a secure anchor point. However, this can be a problem as each penetration point has a risk of leaking into the building and / or allowing leakage of air or moisture. This can lead to oxidation of fasteners in the roof and / or reduce insulating ability of the roof. The risk of leaks increases with the number of mechanical attachments needed, and a relatively large number of mechanical attachments for securing bulky rooftop equipment such as solar panels may need to be very high.

Another problem with many current systems is that it can be time-consuming and labour-intensive to locate and fit each of the individual mechanical attachments in the correct locations.

It would be desirable to provide a method and system for mounting rooftop equipment (such as solar panels) to a roof in which the risk of leaks is reduced, minimised or eliminated; as is the risk of the rooftop equipment damaging the roof more generally over time. It would also be desirable to provide such a method and system which is simple and fast to fit and which is flexible.

### Summary

According to a first aspect, there is provided a method of installing a mount assembly for mounting rooftop equipment. The method comprises: securing a sacrificial membrane to a roof system; providing a rail for attaching rooftop equipment thereto on the sacrificial membrane such that a base of the rail is at least partially in contact with the sacrificial membrane on a first side of the rail; securing the rail to the sacrificial membrane by an induction welding process that comprises inductively heating one or more inductively-heatable portions of, or received in, the base from a second side of the rail that opposes the first side.

This method may provide for secure attachment of rooftop equipment to a roof top. Said secure attachment may be less damaging to the underlying roof system than other methods because it may be the sacrificial membrane that is damaged as a result of the bonding (by induction welding) of the rails to the sacrificial membrane. This reduces or eliminates the need for mechanical fixings between the rail and the roof deck that penetrate the primary membrane which may be the most important or critical weather-proof membrane of the roof system. In some embodiments, there may be no fixings or fasteners directly securing the rail to roof deck which penetrate the primary membrane. In some embodiments, some such fixings or fasteners may be provided but these may be far fewer in number than in the absence of the sacrificial membrane. For example, in some situations (e.g. in areas where high wind is expected) it may be advantageous to include some direct fixings or fasteners between the rail and roof to improve the attachment of the rail to the roof. Furthermore, the sacrificial membrane acts as a protective layer between the rooftop equipment mount and the primary roof membrane. Accordingly, the risk of damage to the main roofing structure by the roof top equipment, for example in high winds or wind gusts may be reduced.

Furthermore, the combination of the sacrificial membrane and induction welding allows for flexible and adaptable installation process. The sacrificial membrane can be strategically placed in areas where rooftop equipment will be mounted, allowing for precise positioning of the rails. The induction welding process can then be performed quickly and efficiently, creating multiple strong attachment points along the length of each rail. These bonds can be provided on an as-need basis without the need for preparing mechanical fixing points prior to placing the rail on the rooftop.

In some embodiments, the one or more inductively-heatable portions may be portions of the base. This may mean that the one or more inductively-heatable portions are features of the base. The one or more inductively-heatable portions may be integrally formed with the rest of the base, for example. In some embodiments, the one or more inductively-heatable portions may be received in the base. This may mean that the one or more inductively-heatable portions are separate or separable from the base but can be received by the base. For example, an inductively-heatable portion may be receivable in a seat defined in the base as will be described in more detail below.

The mount assembly may be referred to as a mount system. The mount assembly or system may comprise the sacrificial membrane and the rail. The mount assembly or system may comprise the one or more inductively-heatable portions. The mount assembly or system may comprise fixtures and fittings for securing the sacrificial membrane to a roof system, for example to a primary membrane of said roof system. Said fixtures and fittings may comprise second inductively-heatable portions and elements. Said fixtures and fittings may comprise fasteners for fastening the second inductively-heatable portions to the roof system. The mount assembly may additionally comprise fixtures and fitting for securing the rooftop equipment directly or indirectly to the rails.

The rooftop equipment may be mounted on a rooftop. The sacrificial membrane may be secured to the roof system such that at least a portion of the roof system is covered by the sacrificial membrane. The rail may be directly or indirectly attached to the rooftop equipment. The induction welding process may be performed to form a bond between the one or more inductively -heatable portions and the sacrificial membrane. Particularly, the one or more inductively-heatable portions may be inductively heated to form a bond between the one or more inductively heatable portions and the sacrificial membrane.

Inductively heating from the second side may mean that a heating tool is positioned adjacent the second side of the rail. The heating tool may be position adjacent the second side of the rail. "Adjacent" may mean in the absence of anything in between. For example, there may be no further membranes or other physical features between the heating tool and the . Adjacent may or may not mean that the heating tool is in contact with the respective inductively-heatable portions.

The heating tool may comprise one or more induction coils. The induction welding may comprise passing an alternating current through the one or more induction heating coils. This may generate an oscillating electromagnetic field around the one or more induction coils. Electrical currents may be induced in the one or more inductively-heatable portions due to the changing magnetic field. These induced currents may generate heat. Heat may be generated due to the electrical resistance of the water barrier. Each inductively-heatable portion may comprise an adhesive such as a PVC (polyvinyl chloride) adhesive, a TPO (thermoplastic polyolefin) adhesive etc. The adhesive may be provided as a coating. The adhesive may be provided as coating on a surface of a body of the inductively-heatable portion for contacting the sacrificial membrane (for example, a bottom surface). Thus, when the inductively-heatable portion is heated, the adhesive may be activated. This may create a bond between the respective inductively-heatable portion and the sacrificial layer. Each inductively-heatable portion may comprise an electrically conductive material such as a metal such as stainless steel.

A rail may be a supporting structure for the rooftop equipment. The role of the rails may be to hold, support, or secure the rooftop equipment in a specific position and to provide alignment. The rail may act as a mounting surface onto which the rooftop equipment is fastened. The rooftop equipment, such as a solar panel, may be coupled directly or indirectly to the rail. Each rail may be arranged for attaching one or more solar panels thereto.

In some examples, the method may comprise providing a plurality of portions of sacrificial membrane. One or more rails may be secured to each portion of sacrificial membrane. In some embodiments, the method comprises providing a first portion of a sacrificial membrane. In some aspects, securing the sacrificial membrane to the roof system may involve securing the first portion of the sacrificial membrane to the roof system. The first portion may be sized and shaped to accommodate one or more rails for mounting rooftop equipment. Providing the rail on the sacrificial membrane may involve positioning the rail on the first portion of the sacrificial membrane. The induction welding process may then be used to secure the rail to this first portion. In some implementations, the first portion may serve as an initial installation area, with additional portions of the sacrificial membrane optionally added as needed for expanded coverage or additional rails.

The method may comprise providing a second portion of the sacrificial membrane. In some aspects, the second portion of the sacrificial membrane may be secured to the roof system adjacent to the first portion. The second portion may be secured using the same or a different method as the first portion.

The method may comprise providing a third portion of sacrificial membrane. The third portion may be secured to the roof system in a location separate from the first and second portions. This may allow for strategic placement of sacrificial membrane portions based on the layout of the rooftop equipment.

The method may comprise securing one or more rails to the first portion of sacrificial membrane in the manner described previously (i.e. using an induction welding approach). The method may comprise securing one or more rails to the second portion of sacrificial membrane in the manner described previously. The method may comprise securing one or more rails to the third portion of the sacrificial membrane in the manner described previously.

The or each inductively-heatable portion may be a primary inductively-heatable element. The method may comprise receiving a primary inductively-heatable element in at least one seat defined in the base of the rail.

The or each inductively-heatable portion may be a discrete primary inductively-heatable element. The primary inductively-heatable element may be separate and/or separable from the base/rail. The or each seat may be provided as an opening in the base of the rail. Said providing may comprise inserting a primary inductively-heatable element in the or each seat from the second side of the base. Each primary inductively-heatable element may comprise or consist of an induction weld disk or plate.

The induction welding the rail to the sacrificial membrane may comprise inductively heating a plurality of discrete inductively-heatable portions. The greater the number of inductively-heatable portions provided, the greater the number of bond points or attachment points between the sacrificial membrane and the rail. Thus, the greater the overall stability and security of the mount assembly on the roof system. In some embodiments, the plurality of discrete inductively-heatable portions may comprise at least three, at least five, or at least ten inductively-heatable portions.

A plurality of seats may be defined in the base of the rail. The method may comprise providing a primary inductively-heatable element in each of the plurality of seats. The method may comprise inductively heating each of the primary inductively-heatable elements. In some embodiments, at least three, at least five, or at least ten seats may be defined in the base of the rail. This may allow for multiple attachment points along the rail, enhancing the overall strength and stability of the mount assembly.

The seats of the plurality of seats may be discrete seats. The seats and/or the inductively heatable portions received in the seats may be non-overlapping.

In some embodiments, securing the sacrificial membrane may comprise induction welding the sacrificial membrane to the roof system. The roof system may comprise a roof deck and a primary membrane. Securing the sacrificial member to the roof system may comprise securing one or more secondary inductively-heatable elements to the primary membrane. Said securing may comprise using a fastener that extends through the primary membrane and into the roof deck. Thus, the method may comprise penetrating the primary membrane with the fastener. The method may comprise providing the sacrificial membrane on the primary membrane. This may be such that one or more secondary inductively-heatable elements are between the primary and sacrificial membranes. The method may comprise inductively heating the one or more secondary inductively-heatable elements.

The secondary inductively-heatable elements may be sandwiched between the primary and sacrificial membranes. The step of inductively heating the one or more secondary inductively-heatable elements may be performed as part of an induction welding process. The step of inductively heating the one or more secondary inductively-heatable elements may be performed to form a bond between the one or more second inductively-heatable elements and the primary and/or sacrificial membranes.

The secondary inductively-heatable element may be non-overlapping with the primary inductively-heatable elements.

In some embodiments, securing the sacrificial membrane to the roof system may not comprise using a fastener that extends through the primary membrane and into the roof deck at all. Instead, the sacrificial membrane may be secured directly to the primary membrane of the roof system. For example, this may comprise forming a bond between the sacrificial membrane and the primary membrane by heating one or both of the sacrificial membrane and primary membrane. This heating may be performed at one or a plurality of locations on the sacrificial membrane. A bond may be formed at each location.

The rooftop equipment may be for mounting at least one of: a solar panel, an antenna, a satellite dish, a small-scale wind turbine, features of an HVAC system, safety systems, railings, roof protection equipment, conductors. This method is particularly well-suited for installing solar panels, providing a secure and weather-resistant mounting solution for renewable energy systems.

The rooftop equipment may be one or more solar panels such that the assembly is a rooftop solar panel attachment assembly. The rail may comprise at least one bracket. The rail may be integrally formed. The rail may be integrally formed such that the base and the brackets are formed as a single piece.

According to a second aspect, there is provided a mount assembly for mounting rooftop equipment. The mount assembly comprises: a sacrificial membrane; and a rail comprising a base; wherein the base is at least partially in contact with the sacrificial membrane on a first side of the rail; and wherein the base is secured to the sacrificial membrane at least in part by one or more primary inductively-heatable portions of, or received in, the base that are bonded to the sacrificial membrane.

The bond may be a weld, such a weld formed in an inductive welding process.

The sacrificial membrane may be secured to a roof system.

The sacrificial membrane may cover at least a portion of the roof system. Specifically, the sacrificial membrane may cover at least a portion of a primary membrane of the roof system.

The or each inductively-heatable portion may be a primary inductively-heatable element. At least one seat may be defined in the base of the rail, the or each seat having a primary inductively-heatable element received therein.

Each primary inductively-heatable element may comprise a body for receiving in a seat of the base and a lip arranged such that the base is sandwiched between the lip and the sacrificial membrane.

A portion of the base may be sandwiched between the lip and the sacrificial membrane.

A top surface of the or each primary inductively-heatable portions may be exposed or uncovered, in particular such that there is no membrane or other feature covering the top surface. A bottom surface of the primary inductively-heatable portion may be in contact with the mount.

The mount assembly may result from the method as described above.

According to a third aspect, there is provided a rooftop equipment attachment kit of parts. The kit comprises: a sacrificial membrane for securing to a roof system; a rail comprising a base; wherein the base comprises a surface on a first side of the base that is configured for at least partially contacting the sacrificial membrane when the sacrificial membrane is secured to a roof system; and wherein the kit comprises one or more inductively-heatable portions of, or receivable in, the base.

The sacrificial membrane may be for securing to the roof system to cover at least a portion of the roof system. The surface on the first side of the base may be a bottom surface of the base.

The or each inductively-heatable portion may be a primary inductively-heatable element. The or each primary inductively-heatable element may be separable from the base. The or each primary inductively-heatable element may be receivable in one or more seats defined in the base of the rail.

Features and / or advantages described in relation to the method of the first aspect may be applicable to the system of the second aspect or the kit of the third aspect, and vice versa.

### Brief Description of Figures

FIG. 1 shows a sectional view of a roof system and rooftop mounting assembly.
FIG. 2 shows a perspective view of a solar panel installed on the roof system.
FIG. 3 shows a flowchart depicting a method of installing a rooftop mounting assembly.
FIG. 4 shows a perspective view of a roof system before installation of a rooftop mounting assembly.
FIG. 5 shows a perspective view of the roof system with portions of sacrificial membrane applied.
FIG. 6 shows a perspective view of the roof system with rails provided on the sacrificial membrane.
FIG. 7 shows a perspective view of the roof system with inductively-heatable elements being inserted into seats defined in the rails of FIG. 6.
FIG. 8 shows a perspective view of the roof system with fittings being received in the rails of FIG. 6.

Common reference numerals are used throughout the figures to indicate similar features.

### Detailed Description

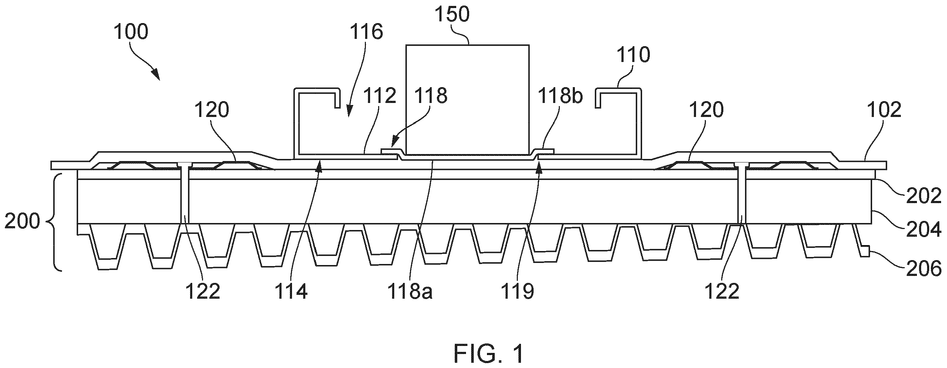

FIG. 1 illustrates a section view of a roof system 200 and a rooftop mounting assembly 100 for securing equipment such as solar panels.

The roof system 200 includes multiple layers. At the bottom is a roof deck 206, which serves as the base structure. In this example, the roof deck 206 is formed of corrugated rolled steel. Above the roof deck 206 is an insulation layer 204, providing thermal insulation for the building. The topmost layer of the roof system 200 is a primary membrane 202, which acts as the main waterproofing / weatherproofing layer for the roof system.

The rooftop mounting assembly 100 is provided substantially on top of the roof system 200 other than for some fasteners 122 which extend into the roof system 200. The rooftop mounting assembly 100 comprises a sacrificial membrane 102 which is provided on the primary membrane 202, covering at least a portion of the primary membrane 202. The rooftop mounting assembly 100 further comprises secondary inductively-heatable elements 120 which are located between the primary membrane 202 and the sacrificial membrane 102. These secondary inductively-heatable elements 120 are secured to the roof system 200 using fasteners 122. The fasteners 122 extend through (i.e. penetrate) the primary membrane 202. The fasteners 122 also extend through the insulation layer 204, and into the roof deck 206 which provides a secure anchoring point for the fasteners.

The sacrificial membrane 102 is secured to the roof system 200 using an induction welding process. This comprises inductively heating the secondary inductively-heatable elements 120. This heating process forms a bond between the secondary inductively-heatable elements 120 and the sacrificial membrane 102, effectively securing the sacrificial membrane 102 to the roof system 200 via the fasteners 122.

A rail 110 is provided on the sacrificial membrane 102. The rail 110 includes a base 112 that is at least partially in contact with the sacrificial membrane 102 on a first side 114 of the rail 110. The base 112 of the rail 110 defines a seat 119. A primary inductively-heatable element 118 is received in the seat 119. Each primary inductively-heatable element 118 comprises a body 118a for being received in the seat 119 of the base 112 and a lip 118b. The lip 118b is arranged such that the base 112 is sandwiched between the lip 118b and the sacrificial membrane 102.

The rail 110 is secured to the sacrificial membrane 102 by welding, performed by an induction welding process. This process involves inductively heating the primary inductively-heatable elements 118 received in the base 112 from a second side 116 of the rail 110. The induction welding process comprises heating the primary inductively-heatable elements 118 using a heating tool 150 comprising an induction coil. The heating tool 150 is shown schematically in FIG. 1. It should be understood that the heating tool 150 is removable and separable from the mounting assembly 100 and, in fact, is not part of the mounting assembly 100.

During the induction welding process, the heating tool 150 is positioned adjacent to the second side 116 of the rail 110, aligned with the primary inductively-heatable element 118. The heating tool 150 inductively heats the primary inductively-heatable element 118, causing it to form a bond with the sacrificial membrane 102. After the heating has been performed, the heating tool 150 is removed, leaving the rail 110 securely attached to the sacrificial membrane 102.

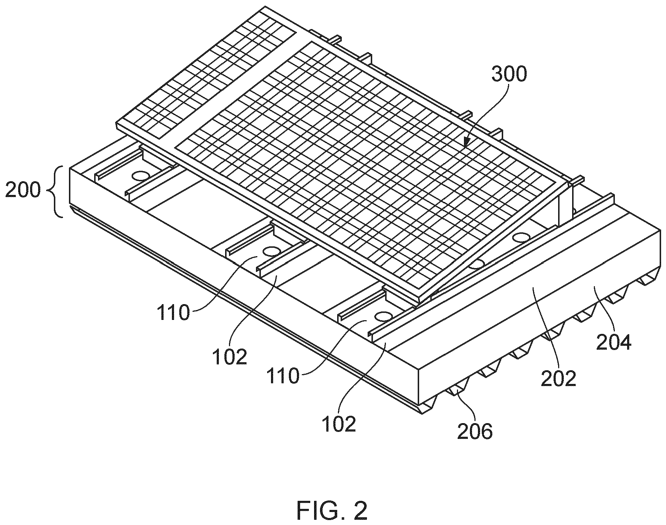

FIG. 2 illustrates a perspective view of a solar panel 300 installed on the roof system 200 using the rooftop mount assembly. Only a portion of the roof system 200 is shown in FIG. 2. The roof system 200 includes the primary membrane 202, the insulation layer 204, and the roof deck 206, as described in relation to FIG. 1. As will be clear from the following description, although Figure 1 shows a single rail 110 with a single seat 119 and a single induction element received therein, the rooftop mounting assembly in this example actually comprises a plurality of rails 110, each rail comprising a plurality of seats 119, each of which may receive an induction element such that the assembly comprises a plurality of induction elements 118 also referred to as primary inductively-heatable elements. Furthermore, in this example, the sacrificial membrane 102 is provided as a plurality of discrete portions on top of the primary membrane 202. Three discrete portions of the sacrificial membrane 102 are shown in FIG. 2, each portion being placed parallel to one another, extending over the primary membrane 202.

Three rails 110 are shown in FIG. 2 positioned on respective portions of the sacrificial membrane 102. The rails 110 run parallel to each other, providing support for the solar panel 300. In some examples, a plurality of rails may be provided on a (single) portion of the sacrificial membrane 102.

The solar panel 300 is mounted on top of, and is secured to, the rails 110. In some examples, multiple solar panels are installed on the rooftop mount assembly, arranged in rows or arrays to maximize energy production. The number and arrangement of rails 110 and portions of sacrificial membrane 102 are adjusted to accommodate the desired number and configuration of solar panels.

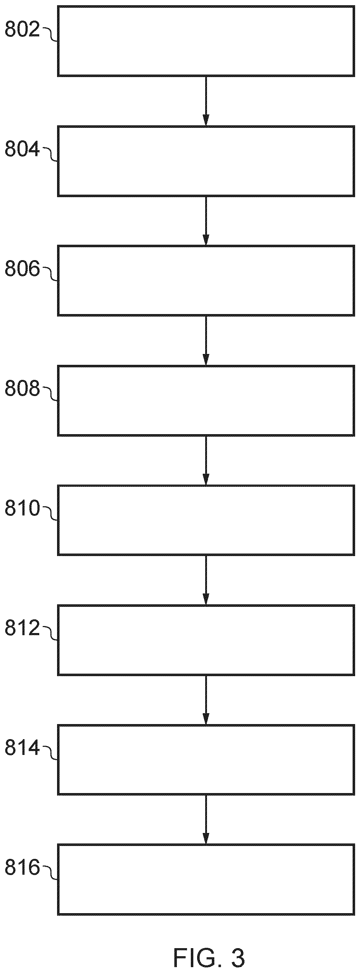

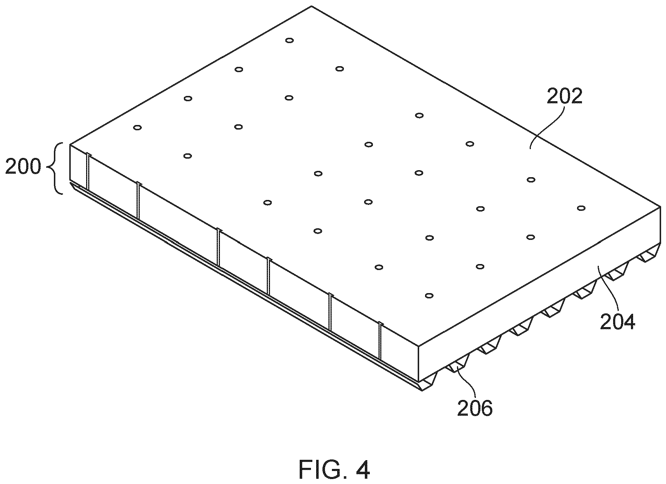

FIG. 3 illustrates a flowchart depicting a method for installing the rooftop mounting assembly 100. FIG. 4 illustrates a perspective view of a portion of the roof system 200, before installing the rooftop mount assembly.

Step 802 of the method comprises securing a plurality of secondary inductively-heatable elements 120 to a roof deck 206. This is achieved using a fastener 122 for each secondary inductively-heatable element 120. Each fastener 122 penetrates the primary membrane 202 of the roof deck 206 and extends through the primary membrane 202, the insulation layer 204, and into the roof deck 206. The secondary inductively-heatable elements 120 are for securing portions of sacrificial membrane 102 to the primary membrane, as will be described below.

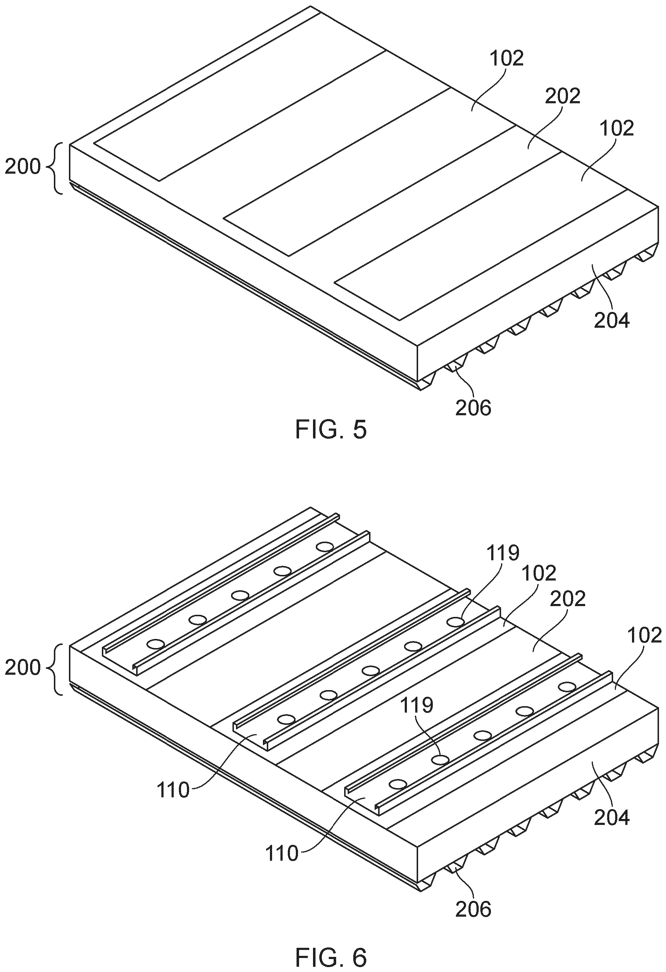

Step 804 comprises providing one or more portions of sacrificial membrane 102 on the primary membrane 202. This step is illustrated in FIG. 5.

FIG. 5 illustrates a perspective view of the roof system 200 with portions of a sacrificial membrane 102 placed on the primary membrane 202. The portions of sacrificial membrane 102 are discrete strips placed on the primary membrane 202. In Fig. 5, three strips of sacrificial membrane 102 are arranged parallel to each other with spaces between them although, in other examples, there may be different numbers of portions of sacrificial membrane (including a single continuous portion of sacrificial membrane). Each portion of sacrificial membrane 102 is overlain on a plurality of secondary inductively-heatable elements 120. Thus, the positions of the portions of sacrificial membrane 102 may depend on the location of the secondary inductively-heatable elements 120. So, step 802 may be important for determining the placement of the portions of sacrificial membrane 102 in step 804.

Thus, the sacrificial membrane 102 is positioned such that one or more secondary inductively-heatable elements 120 are sandwiched between the primary membrane 202 and the sacrificial membrane 102. This is not shown in Figure 5, but should be clear when turning back to Figure 1.

In step 806, the one or more secondary inductively-heatable elements 120 are inductively heated. This heating process forms a bond between the secondary inductively-heatable elements 120 and both the primary membrane 202 and the sacrificial membrane 102.

In this example, each secondary inductively-heatable element 120 is in the shape of disk. Each disk comprises a first surface and an opposing second surface. A fastener 122 extends through a central opening in each disk-shaped secondary inductively-heatable element 120. Each opening passes through the first and second surfaces substantially perpendicularly to those surfaces. The first surface of the secondary inductively-heatable element 120 is in contact with the primary membrane 202 and the fastener 122 anchors the secondary inductively-heatable element 120 in place with respect to the primary membrane 202. The second surface of each secondary inductively-heatable element 120 is in contact with a respective portion sacrificial membrane 102. In this example, each secondary inductively-heatable element 120 comprises a heat-activatable adhesive such as a PVC heat-activatable adhesive. In particular, in this example, the second surface of the secondary inductively-heatable element 120 comprises the heat-activatable adhesive, for example as a coating. When each secondary inductively-heatable element 120 is inductively heated in step 806, the heat-activatable adhesive is activated. As it is the second surface of each secondary inductively-heatable element 120 that is in contact with a respective portion of sacrificial membrane, the inductive heating (and subsequent cooling) causes the adhesive of the secondary inductively-heatable element 120 to form a bond between the sacrificial membrane 102 and the respective secondary inductively-heatable elements 120. This anchors the secondary inductively-heatable elements 120 with respect to the fasteners 122 and so with respect to the roof system 200 more generally.

Step 808 comprises providing one or more rails 110 for attaching rooftop equipment on each portion of the sacrificial membrane 102. This is illustrated in FIG. 6.

FIG. 6 illustrates a perspective view of the roof system 200 with rails 110 provided on the respective portions of the sacrificial membrane 102. The rails 110 are positioned on top of the portions of the sacrificial membrane 102. Three rails 110 are arranged parallel to one another. It should be clear that, in other examples, the rooftop mounting assembly may comprise a different numbers of rails 110 (e.g. more than three or less than three). The number of rails 110 may depend on the size and type of equipment to be mounted. For example, if large or multiple solar panels are to be mounted, more rails 110 may be required than if smaller or fewer solar panels are to be mounted. Similarly, it is not essential for there to be a 1:1 ratio between the portions of sacrificial membrane 102 and rails 110. For example, multiple rails 110 may be provided on a single portion of sacrificial membrane 102. In some examples, a single (continuous) portion of sacrificial membrane 102 may be provided with all rails provided thereon.

Each rail 110 comprises a base 112 (as was described in relation to Figure 1). Each base 112 defines a plurality of seats 119 which are distributed along the length of the respective rail / base. The seats 119 are circular openings in the base 112 of the rails 110 in this example. In the illustrated example, five seats 119 are provided in the base 112 of each rail 110, and are spaced apart evenly along the rail. In other examples, different numbers of seats 119 may be provided and the seats 119 may or may not be uniformly spaced. The seats 119 are arranged to accommodate inductively-heatable portions 118, which are used to secure the rails 110 to the sacrificial membrane 102 through an induction welding process, as will be described below. Thus, an anchor point will eventually be provided by each seat 119 (anchoring the rail to the respective portion of sacrificial membrane 102). The number and spacing of seats 119 (and so anchor points) can be chosen based on need. The number and / or density of anchoring points may need to increase for large rooftop equipment, and vice versa. Typically, each rail will comprise a plurality of seats 119, for example at least 3, or at least 5, or at least 10 seats 119.

The base 112 of each rail 110 is at least partially in contact with the sacrificial membrane 102 on a first side 114 of the rail 110.

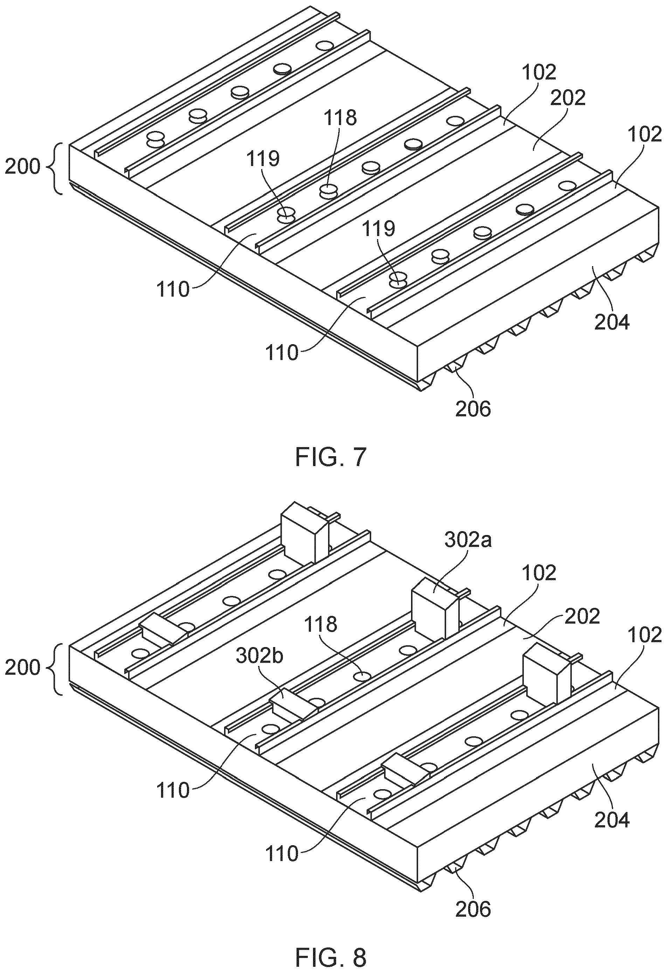

In step 810, a primary inductively-heatable element 118 is inserted in each of a plurality of seats 119 defined in the base 112 of the rail 110. This is shown in FIG. 7.

FIG. 7 illustrates a perspective view of the roof system 200 with primary inductively-heatable elements 118 being placed in seats 119 of the rails 110. The primary inductively-heatable elements 118 are received in the seats 119 defined in the base 112 of each rail 110.

In this example, each primary inductively-heatable element 118 is substantially disk shaped but comprises a body 118a and a lip 118b where the lip 118b extends from, and is slightly offset from, the body 1118a. The body 118a is arranged to be receivable in a seat 119 of a rail 110. The lip 118b is arranged such that the base 112 of a rail 110 is sandwichable between the lip 118b and the sacrificial membrane 102 when the body 118a is received in a seat 119 of the rail. An example of this is most clearly shown in FIG. 1. In this example, each primary inductively-heatable element 118 has a total diameter of about 100 millimeters, with the body having a diameter of about 80 millimeters. Each primary inductively-heatable element 118 has a thickness of about 1.6 millimeters.

At least the body 118a of each primary inductively-heatable element 118 is formed of, or comprises, an electrically conductive material such as stainless steel. Each disk comprises a first surface and an opposing second surface. In this example, each second surface comprises a coating of heat-activatable adhesive. When the primary inductively-heatable element 118 is received in a seat, the first surface faces upwards from the rail and is exposed. The second surface makes contact with a portion of sacrificial membrane 102.

Step 812 comprises securing each rail 110 to a respective portion of the sacrificial membrane 102. This is achieved using an induction welding process that comprises inductively heating each of the primary inductively-heatable elements 118 using an induction heating tool 150 which, in this example, is a Centrix electro-bonding tool available from Valro.co.uk. FIG. 1 shows the heating tool 150 in place for a heating a primary inductively-heatable element 118, and the heating tool 150 is adjacent to the primary inductively-heatable element 118. The heating tool 150 is on the second side 116 of the rail 110. In other words, the heating is from the second side 116. Unlike typical induction welding, the heating tool in this example is adjacent to the primary inductively-heatable element 118. Normally, in an induction welding process involving a roofing membrane, a roofing membrane would be between the heating tool and the induction disk. The heating of the second inductively-heatable portions 120 described above is an example of a conventional induction welding process in relation to roofing. The heating of the primary inductively-heatable element 118 is reversed. Thus, the present disclosure may be said to describe an innovative "reverse" induction welding approach to bond one or more rails 110 to a respective portion or portions of sacrificial membrane 102.

The induction heating tool 150 generates an alternating electro-magnetic field which induces an alternating current in the electrically conductive material of the primary inductively-heatable element 118 thus causing heating. This activates the heat-activatable adhesive. This heating (and subsequent cooling) results in a bond forming between the body of the primary inductively-heatable element 118 and the respective portion of sacrificial membrane 102. Thus, the primary inductively-heatable element 118 is anchored to the sacrificial membrane 102. Because the base 112 of the rail 110 is sandwiched between the lip 118a of the primary inductively-heatable element 118 and the sacrificial membrane, the primary inductively-heatable element 118 also has the effect of anchoring the rail 110 to the sacrificial membrane 102. As the sacrificial membrane 102 is anchored to the roof system 200 (as described above), the rail is also anchored with respect to the roof system 200, therefore.

In this example, each primary inductively-heatable element 118 is heated for about 20 seconds using the heating tool 150.

Step 814 comprises attaching first fixings 302a and second fixings 302b to the rails 110. This is shown in FIG. 8.

The fixings 302a, 302b serve as mounting points for coupling the rooftop equipment (e.g. solar panel 300) to the rails 110. One first fixing 302a and one second fixing 302b are provided on each rail 110 in this example. The fixings are positioned at intervals along the rails 110 and are secured to the rails 110. In this example, there are inserts or openings defined in the rails 110 in which protruding portions of the first or second fixings 302a and 302b may be received. The openings and protruding portions are arranged such that the first and second fixing 302a and 302b can be locked in pre-defined positions within the rails 110. This is not illustrated in the drawings. In other examples, different means for coupling the rooftop equipment to the rails may be used. This could be via a direct attachment to the rails, for example.

In this example, the first fixings 302a are taller than the second fixings 302b. This height difference allows solar panels 300 to be angled relative to the roof system 200 when installed. The angled orientation may allow for optimization solar energy capture by positioning the panels at an ideal angle relative to the sun's path.

Step 816 comprises mounting the rooftop equipment (solar panel 300) to the rail 110. This step uses the first fixings 302a and second fixings 302b to secure the solar panel 300 in place.

The primary membrane 202 is the outermost layer of the roof system 200. It is typically made of a durable, waterproof material such as PVC or TPO (Thermoplastic Polyolefin). The primary membrane 202 is designed to protect the underlying layers from water infiltration and weather-related damage. The sacrificial membrane is also typically made of a durable, waterproof material such as PVC.

In some examples, the rails 110 are constructed from aluminum, providing a lightweight yet sturdy support structure for the rooftop equipment. The rails are integrally formed in some examples.

In some examples, securing the sacrificial membrane 102 to the roof system 200 may not comprise using fasteners 122. Instead, the sacrificial membrane 102 may be secured directly to the primary membrane 202 of the roof system 200. For example, this may comprise forming a bond between the sacrificial membrane 102 and the primary membrane 202 by heating one or both of the sacrificial membrane 102 and primary membrane 202. This heating may be performed at one or a plurality of locations on the sacrificial membrane 102. A bond may be formed at each location.

### List of reference numerals:

102 - sacrificial membrane
110 - rail
112 - base of rail
114 - first side of rail
116 - second side of rail
118 - inductively-heatable portion (also called a primary inductively-heatable element, an induction weld disk or an induction weld plate)
118a - body of inductively-heatable portion
118b - lip of inductively-heatable portion
119 - seat (provided as an opening in the base of the rail)
120 - secondary inductively-heatable elements (could also be called a secondary induction weld disk or a secondary induction weld plate)
122 - fastener (for securing a secondary inductively-heatable element to a roof system)
200 - roof system
202 - primary membrane
204 - insulation layer
206 - roof deck (e.g. corrugated roof deck)
300 - rooftop equipment (in this case, solar panel)
302a - first fixing for securing first end of solar panel to rail
302b - second fixing for securing second end of solar panel to rail

## Claims

1. A method of installing a mount assembly for mounting rooftop equipment, the method comprising:
securing a sacrificial membrane (102) to a roof system (200);
providing a rail (110) for attaching rooftop equipment thereto on the sacrificial membrane (102) such that a base (112) of the rail (110) is at least partially in contact with the sacrificial membrane (102) on a first side of the rail (114); and
securing the rail (110) to the sacrificial membrane (102) by an induction welding process that comprises inductively heating one or more inductively-heatable portions (118) of, or received in, the base (112) from a second side (116) of the rail (110) that opposes the first side (114).

2. The method of claim 1, wherein the or each inductively-heatable portion (118) is a primary inductively-heatable element and wherein the method comprises receiving a primary inductively-heatable element (118) in at least one seat (119) defined in the base of the rail (110).

3. The method of claim 1 or 2, wherein the induction welding the rail (110) to the sacrificial membrane (102) comprises inductively heating a plurality of discrete inductively-heatable portions.

4. The method of any one of the preceding claims, when dependent on claim 2, wherein a plurality of seats (119) are defined in the base (112) of the rail (110) and wherein the method comprises providing a primary inductively-heatable element (118) in each of the plurality of seats (119) and inductively heating each of the primary inductively-heatable elements (118).

5. The method of any one of the preceding claims, wherein securing the sacrificial membrane (102) comprises induction welding the sacrificial membrane (102) to the roof system (200).

6. The method of claim 5, wherein the roof system (200) comprises a roof deck (206) and a primary membrane (202); wherein securing the sacrificial member (102) to the roof system (200) comprises:
securing one or more secondary inductively-heatable elements (120) to the primary membrane (202) using a fastener (122) that extends through the primary membrane (202) and into the roof deck (206);
providing the sacrificial membrane (102) on the primary membrane (202) such that one or more second inductively-heatable elements (120) are between the primary and sacrificial membranes (202, 102); and
inductively heating the one or more secondary inductively-heatable elements (120).

7. The method of any one of the preceding claims, wherein the induction welding process comprises heating the one or more inductively-heatable portions (118) using a heating tool (150) comprising an induction coil.

8. The method of any one of the preceding claims, wherein the rooftop equipment is one or more solar panels.

9. A mount assembly for mounting rooftop equipment, the mount assembly comprising:
a sacrificial membrane (102); and
a rail (110) comprising a base (112);
wherein the base (112) is at least partially in contact with the sacrificial membrane (102) on a first side (114) of the rail (110); and
wherein the base (112) is secured to the sacrificial membrane (102) at least in part by one or more primary inductively-heatable portions (118) of, or received in, the base (112) that are bonded to the sacrificial membrane (102).

10. The mount assembly of claim 9, wherein the sacrificial membrane (102) is secured to a roof system (200).

11. The mount assembly of claim 9 or 10, wherein the or each inductively-heatable portion (118) is a primary inductively-heatable element, and wherein at least one seat (119) is defined in the base (112) of the rail (110), the or each seat (119) having a primary inductively-heatable element (118) received therein.

12. The mount of claim 11, wherein each primary inductively-heatable element (118) comprises a body (118a) arranged to be received in a seat (119) of the base (112) and a lip (118b) arranged such that the base (112) is sandwiched between the lip (118b) and the sacrificial membrane (102).

13. The mount of any one of claims 9 to 12, wherein the mount assembly results from the method of any one of claims 1 to 8.

14. A rooftop equipment attachment kit of parts, the kit comprising:
a sacrificial membrane (102) for securing to a roof system (400); and
a rail (110) comprising a base (112);
wherein the base (112) comprises a surface on a first side (114) of the base (112) that is configured for at least partially contacting the sacrificial membrane (102) when the sacrificial membrane (102) is secured to a roof system (200); and
wherein the kit comprises one or more inductively-heatable portions (118) of, or receivable in, the base.

15. The kit of claim 14, wherein the or each inductively-heatable portion (118) is a primary inductively-heatable element and wherein the or each primary inductively-heatable element (118) is separable from the base (112) and receivable in one or more seats (119) defined in the base (112) of the rail (110).
